Europäisches Patentamt

(19) European Patent Office

Office européen des brevets

(11) Publication number: **0 217 537**
**B1**

## EUROPEAN PATENT SPECIFICATION

(45) Date of publication of the patent specification:
**27.12.89**

(51) Int. Cl.⁴: **F 02 B 37/14**

(21) Application number: **86306623.9**

(22) Date of filling: **27.08.86**

(54) Power generation apparatus for use with an internal combustion engine.

(30) Priority: **28.08.85 JP 188826/85**
**28.08.85 JP 188827/85**

(43) Date of publication of application:
**08.04.87 Bulletin 87/15**

(45) Publication of the grant of the patent:
**27.12.89 Bulletin 89/52**

(84) Designated Contracting States:
**DE GB**

(56) References cited:
**EP-A-0 079 100**
**EP-A-0 159 146**
**DE-A-2 206 450**
**DE-A-2 808 147**
**DE-A-2 951 136**
**FR-A-2 183 337**
**GB-A-800 263**

**PATENTS ABSTRACTS OF JAPAN, vol. 8, no. 216
(M-329) 1653 , 3rd October 1984; & JP-A-59 101 540
(NEC HOME ELECTRONICS K.K.) 12-06-1984
PATENTS ABSTRACTS OF JAPAN, vol. 8, no. 270
(M-344) 1707 , 11th December 1984; & JP-A-59 141 711
(ISUZU JIDOSHA K.K.) 14-08-1984**

(73) Proprietor: **Isuzu Motors Limited, 6-22- 10
Minamiooi Shinagawa- ku, Tokyo 140 (JP)**
Proprietor: **Hitachi, Ltd., 5-1, Marunouchi 1-chome,
Chiyoda- ku Tokyo 100 (JP)**

(72) Inventor: **Kawamura, Hideo, 3129- 13, Okada
Samukawa- machi, Kouza- gun Kanagawa (JP)**
Inventor: **Tamai, Katsuyuki, 709, Izumi- cho
Totsuka- ku, Yokohama- shi Kanagawa (JP)**
Inventor: **Saito, Shigeki, 261- 16, Oaza Tabiko,
Katsuta- shi Ibaraki (JP)**
Inventor: **Yamanaka, Toshihiro, 5-14, Shinmachi
5-chome, Hoya- shi Tokyo (JP)**

(74) Representative: **Brunner, Michael John, GILL
JENNINGS & EVERY 53- 64 Chancery Lane,
London WC2A 1HN (GB)**

EP 0 217 537 B1

**Description**

This invention relates to power generation apparatus for use with an internal combustion engine and, more particularly, relates to the provision of a motor/generator arranged on the turbine shaft of a supercharger of an internal combustion engine, and to the control of the motor/generator.

A vehicle which is driven by an internal combustion engine is equipped with a large number of auxiliary electrical devices. These include a starter motor, an ignition device, alarms, various lighting equipments, such as the vehicle headlights, various indicators and the like. The vehicle is provided with a secondary or storage battery as a power supply for these devices and with a generator driven by the internal combustion engine for the purpose of charging the battery. Vehicles now come equipped with a number of newly-developed electrical devices in addition to the equipment mentioned above. The provision of all of these devices results in a large consumption of electric power.

To replenish the electric power consumed by these devices, the battery is charged by the generator, which is driven by the output of the internal combustion engine. However, since the mechanical energy involved is rotational energy applied to the generator from the engine crankshaft by way of a V-belt, a portion of the net output of the engine is consumed as electric power by the electrical devices.

Furthermore, a size limitation is placed upon the external dimensions of the generator because of the engine layout, as a result of which the maximum power is limited to about 700 watts at 24 volts. It is quite probable that this will not be sufficient to cope with the power consumption of the many electrical devices expected to be added to vehicles in the future.

Some vehicles now come equipped with a supercharger, in which a turbine is driven by utilising the energy possessed by engine exhaust gas and the engine cylinders are supercharged with air by means of a compressor coupled to the turbine, whereby the fuel is burnt more efficiently. However, since the exhaust gas has only a small energy content when the internal combustion engine is running at a low speed, supercharging pressure is then low and the filling efficiency is poor. The result is an insufficient increase in output and torque.

An object of the present invention is to provide an electrical power generation apparatus for an internal combustion engine in which, when the battery is charged, there is no consumption of the net output of the engine by the apparatus, and in which an improvement is achieved in torque generation at low speeds.

FR-A-2 183 337 discloses apparatus for use with an engine having a supercharger comprising a first impeller located, in use, in an intake path of the engine and a second impeller located, in use, in an exhaust path of the engine and coupled to a rotary shaft of the first impeller; a rotary electric machine comprising a rotor driven by the rotary shaft and a stator mounted around the rotor; means for sensing the rotational speed of the engine; means for sensing the state of loading of the engine; means for controlling the rotary electric machine so that the machine will operate as a motor when the load on the engine is determined to be greater than a predetermined value based on a signal from the loading state sensing means and so that the machine will operate as a generator when the load on the engine is determined to be smaller than the predetermined value based on the signal from the loading state sensing means; and a battery mounted on a vehicle on which the engine is mounted.

The present invention is characterised by means for sensing the quantity of fuel supplied to the engine, the state of loading of the engine being based on the amount of fuel supplied thereto and the rotational speed of the engine; an inverter for converting DC electrical power from the battery into AC electric power and for supplying AC electric power to the rotary electric machine based on a control signal from the control means when the rotary electric machine operates as a motor; a PWM (Pulse Width Modulation) controller for controlling, at a predetermined value, the voltage of the electric power generated by the electric rotary machine when the rotary electric machine operates as a generator; and a regulator for regulating the electric power with the voltage thereof controlled by the PWM controller to match the voltage of the battery and for charging the battery with the regulated electric power.

Embodiments of the invention will now be described, by way of example, with reference to the accompanying drawings, in which:

Fig. 1   is a cross-sectional view showing the construction of one form of supercharger and motor/generator assembly;

Fig. 2   is a cross-sectional view showing the construction of another form of supercharger and motor/generator assembly;

Fig. 3   is a schematic block diagram illustrating a combination of an internal combustion engine with a supercharger and a control unit;

Fig. 4   shows curves indicating the relationship between fuel flow rate, which is indicative of the loading of an internal combustion engine, and engine speed; and

Fig. 5   is a flowchart illustrating a method of operation of an apparatus according to the invention.

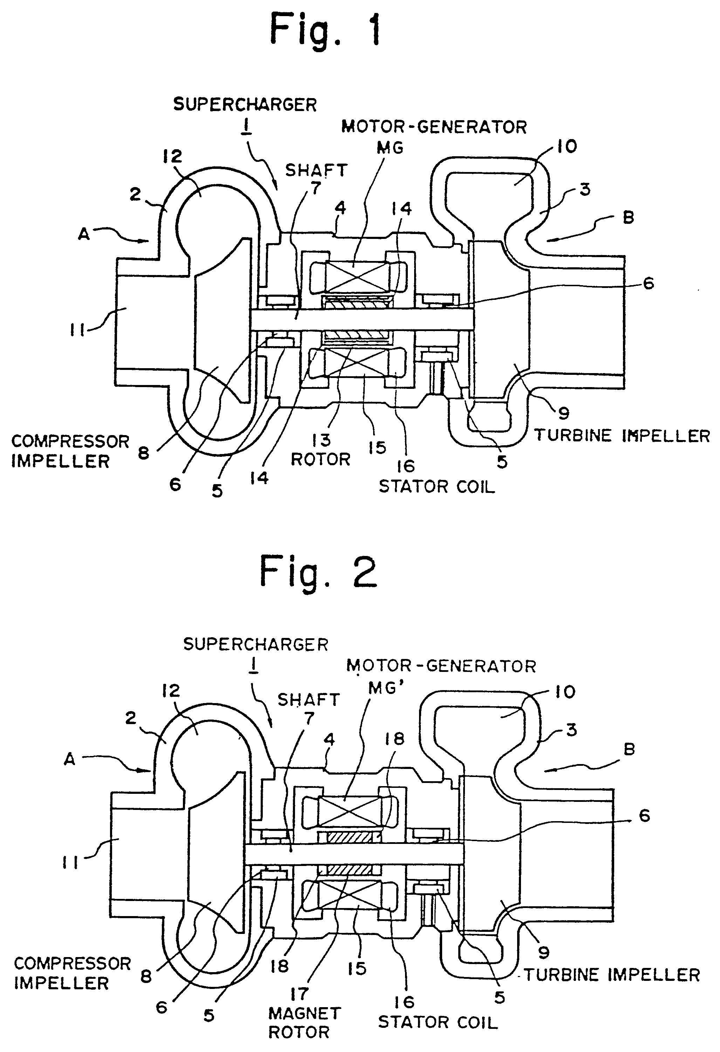

Referring to Fig. 1, a supercharger 1 includes a first turbine A provided at a point along an intake pipe of an internal combustion engine, a second turbine B provided at a point along an exhaust pipe of the engine, a compressor housing 2, a turbine housing 3, and a centre housing 4. The centre housing 4 has a core portion, the two ends of which are each provided with a fixed bearing 5 and a floating metal insert 6 which rotates in sliding fashion within the fixed bearing 5. A shaft 7 is rotatably supported at both ends by the floating metal inserts 6.

An object of the present invention is to provide an electrical power generation apparatus for an internal combustion engine in which, when the battery is charged, there is no consumption of the net output of the engine by the apparatus, and in which an improvement is achieved in torque generation at low speeds.

A compressor impeller 8 is mounted on one end of the shaft 7, and a turbine impeller 9 is mounted on the other end thereof. The impellers 8 and 9 are accommodated within the compressor housing 2 and turbine housing 3, respectively. The turbine impeller 9 is rotated by energy possessed by exhaust gas fed into a scroll 10, and rotates the compressor impeller 8 via the shaft 7. Air introduced via an intake pipe 11 undergoes a pressure conversion within a diffuser 12, and is fed under pressure into the cylinders of the internal combustion engine.

A squirrel-cage rotor 13 is arranged on the shaft 7 near its central portion, and comprises a plurality of axially-extending conductors in the vicinity of axially-stacked silicon steel plates, the conductors being short-circuited to conductor plates 14 provided at both ends.

A stator core 15 encircles the rotor 13 and is provided with a stator coil 16 constituting a winding for producing a predetermined rotating field. Accordingly, the rotor 13 can be provided with a rotating force by supplying an AC current to the stator coil 16, thereby rotating the shaft 7. If the shaft 7 is rotated by the application of a high-speed rotation greater than the synchronous speed produced by the alternating current, the rotor 13, the stator core 15 and the stator coil 16 form a generator, so that an electromotive force can be obtained from the stator coil 16. Accordingly, the electrical rotary machine comprising the rotor 13, the stator core 15 and the stator coil 16 constitutes a motor/generator MG.

Fig. 2 shows the construction of another form of supercharger, similar to that of Fig. 1 but having an alternative motor/generator construction. In this case, the rotor is an axially-elongate ringshaped magnet rotor, comprising a magnetic body including a rare earth element and having a large residual magnetism. The rotor 17 is arranged on the shaft 7 near its central portion, and is fixedly held at both end faces by metal discs 18 having a high tensile strength. Carbon fibres are wound tightly around the outer periphery of the magnetic rotor 17 to provide the rotor with a high degree of durability so that it can withstand the centrifugal force and vibration produced by very high speed rotation.

The stator core 15 encircles the rotor 17 and produces an electromotive force in the stator coil 16 by induction caused by a changing flux produced by rotation of the rotor 17.

Accordingly, when the shaft 7 is rotated by an external force, the electrical rotary machine constituted by the rotor 17, the stator core 15 and the stator coil 16 acts as a generator in which the stator coil 16 provides an alternating current due to the changing flux caused by rotation of the magnetic rotor 17. If AC power is supplied to the stator coil 16, the electrical rotary machine acts as a motor in which the rotor 17 rotates. Hence, the machine 15, 16, 17 constitutes a motor/generator MG'.

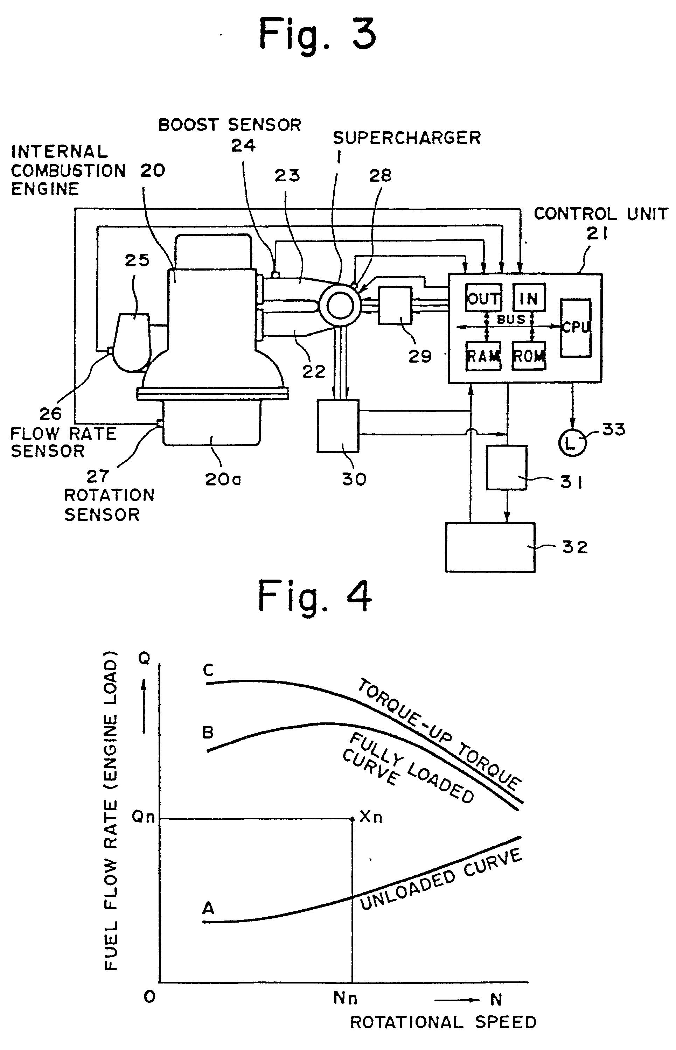

Fig. 3 is a block schematic diagram showing an internal combustion engine 20 equipped with either of the above-described superchargers 1 and a control unit 21. An exhaust manifold 22 communicates with an exhaust port of the internal combustion engine 20 and with the scroll 10 of the supercharger 1. An intake manifold 23 provides the cylinders with supercharged air fed under pressure by the compressor impeller 8 of the supercharger 1. The intake manifold 23 is provided, at a point along its length, with a boost sensor 24 which serves as means for sensing the boost pressure of the supercharged air and delivers a signal to the control unit 21 indicating the intake pressure of the engine. A fuel injector 25 is provided on the body of the engine 20 and is equipped with a fuel flow rate sensor 26 serving as means for sensing the fuel injection rate of the injector 25, in order to sense the loading of the engine. The sensor 26 provides the control unit 21 with a signal indicative of the sensed fuel flow rate.

The engine 20 has a crankcase 20a provided with a rotation sensor 27 for sensing the rotational speed of the crankshaft and providing the control unit 21 with a signal indicative thereof. The motor/generator MG is provided with a rotor position sensor 28. During power generation when the rotor 13 or 17 is rotating at high speed, the flux cutting the stator coil 16 is disturbed and there is a reduction in the power factor of the electromotive force. In order to prevent this, the rotor position sensor 28 delivers an output signal to the control unit 21, which responds by controlling the phase of the electromotive force from the stator coil 16 to improve the power factor for power generation at high-speed rotation.

The control unit 21 comprises a processor (CPU) for executing data processing, a read-only memory (ROM) storing a program for controlling the motor/generator MG and an inverter 29 which will be described below, an input port, an output port, a random-access memory (RAM) for storing the results of the processing as well as other data, and an address bus (BUS) interconnecting these components. The boost sensor 24, the fuel flow rate sensor 26, the rotation sensor 27 and the rotor position sensor 28 are connected to the input port, which receives the output signals produced by these sensors. The motor/generator MG, the inverter 29, a PWM controller 30 and a regulator 31 are connected to the output port, which outputs signals for controlling these components.

The inverter 29 is supplied with direct current from a battery 32 via the control unit 21 and converts the d.c. supply into an alternating current so that the motor/generator MG will operate as a

EP 0 217 537 B1

motor. The a.c. supply from the inverter 29 therefore causes rotation of the shaft 7 to assist in the supercharging operation of the compressor impeller 8 rotated by the exhaust energy. The arrangement is such that this assisting operation is controlled by the output frequency and the output voltage of the inverter 20 in accordance with a command from the control unit 21.

The PWM controller 30 receives the generated power produced when the motor/generator MG operates as a generator, and functions to control the voltage of this power supply to a predetermined value. The power supply voltage is related to the voltage of the battery 32 by the regulator 31, so that the battery 32 will be charged. The control unit 21 is provided with a lamp 33 which lights when the battery 33 is not sufficiently charged.

Fig. 4 shows curves indicating the relationship between fuel flow rate Q, which is indicative of the load on the internal combustion engine, and the rotational speed N of the engine. A is a curve indicating an unloaded state, B is a curve showing the fully loaded state, and C is a torque-up curve. By way of example, let the fuel flow rate be Qn, and let the rotational speed be Nn. In such case, a point Xn is obtained between the unloaded curve A and the fully loaded curve B and indicates a partially-loaded region of operation of the internal combustion engine.

The operation of the embodiment having the arrangement shown in Fig. 3 will now be described. Let us assume that the engine 20 is supplied with fuel by the injector 25 at the flow rate Qn, and that the rotational speed of the engine 20 is Nn. Under these conditions, the control unit 21 receives a signal from the fuel flow rate sensor 26 indicative of Qn, and a signal from the rotation sensor 27 indicative of Nn. In response to the signals indicative of Qn and Nn, the control unit 21 addresses its ROM to sense that the engine 20 is in the partially-loaded region between the unloaded curve A and the fully-loaded curve B, and, based upon this fact, causes the motor/generator MG to operate as a generator. The power from the stator coil 16 provided as a result of rotation of the magnetic rotor 13 or 17 is delivered to the PWM controller 30, which operates to control this power to a predetermined voltage value. The regulator 31 relates this voltage to that of the battery 32, so that the battery is charged. If the rotor 13 or 17 is rotated at ultraspeed during power generation, the generated power has a high frequency, and a large phase difference develops between the voltage and current, as a result of which the power factor is reduced. However, the rotor position sensor 28 senses this phase difference and provides the control unit 21 with a corresponding signal, whereby the control unit 21 controls the current flowing through the windings of the stator coil 16 to reduce the phase difference and thereby improve the power factor.

Next, let us assume that the amount of fuel supplied to the internal combustion engine 20 increases so that the operating region lies between the fully loaded curve B and the torque-up curve C shown in Fig. 4. The fuel flow rate sensor 26 and the rotation sensor 27 provide the control unit 21 with the corresponding signals. In response, the control unit 21, in accordance with the control program for the motor/generator MG stored in the ROM, executes control in such a manner that the motor/generator MG operates as a motor. Furthermore, based on output signals from the fuel flow rate sensor 26, the rotation sensor 27 and the boost sensor 24, the control unit 21 controls the output frequency and voltage of the inverter 29 in accordance with a control map stored in the ROM, so that the stator coil 16 is provided with power to assist in the supercharging operation of the compressor impeller 8. The motor/generator MG thus operates as a motor so as to obtain optimum boost pressure. Although the exhaust gas energy increases and the driving force of the turbine impeller 9 increases as a result of the foregoing series of operations, the control unit 21 exercises control in such a manner that a predetermined upper limit of the boost pressure is not exceeded. In other words, when the boost pressure reaches its upper limit, the motor/generator MG operates as a generator so that the mechanical power can be absorbed. If the boost pressure has not reached a predetermined value even when the motor/generator MG operates as a motor and the supercharging operation of the compressor impeller 8 is assisted, the output frequency and output voltage of the inverter 29 are controlled in such a manner that the output of the motor will rise, thereby supplying the stator coil 16 with electric power.

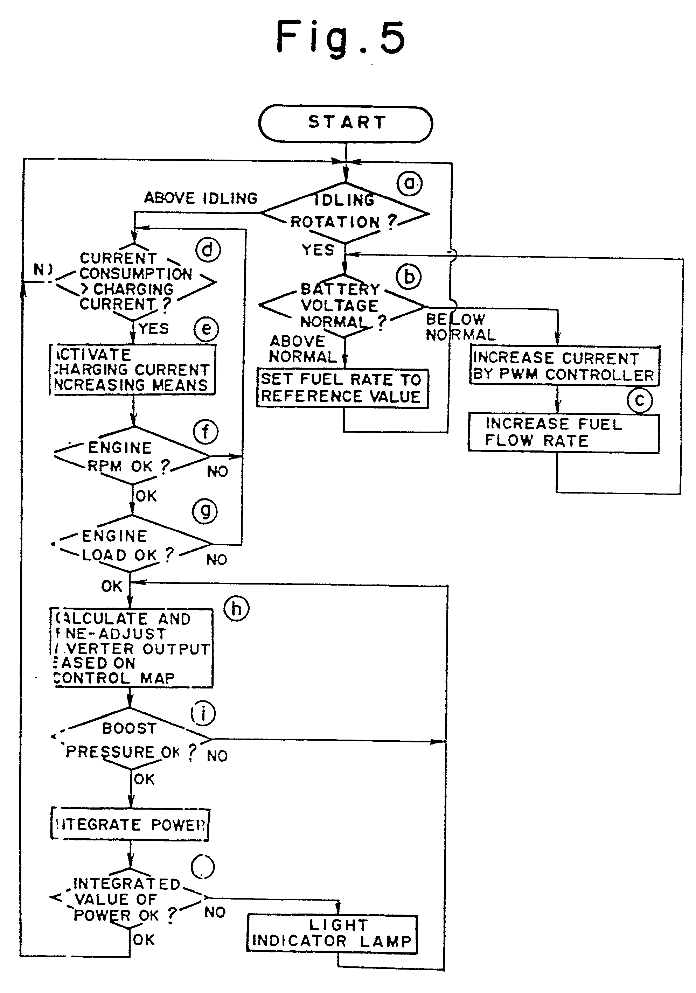

Fig. 5 is a flowchart illustrating an example of a method of operation of apparatus according to the embodiment. In the flowchart, an initial step a calls for the rotational speed to be checked based on a signal from the rotation sensor 27. If the rotational speed has attained a predetermined idling rpm value, the program proceeds to a step b, which calls for the battery voltage to be checked. If the battery voltage is found to be normal or to have a value above a predetermined value, charging is unnecessary. As a result, the fuel flow rate is held at a reference value, and the program returns to the step a.

If the battery voltage is found to be below the predetermined voltage value at the step b, the power from the motor/generator MG operating as a generator is controlled in such a manner that the charging current is increased by the PWM controller 30, thereby charging the battery 32 via the regulator 31. Since the load on the motor/generator MG is increased due to the charging power, the fuel flow rate is raised and increases the energy of the exhaust gas (step c).

If the predetermined idling rpm value is exceeded at the step a, the current consumed by the battery 32 and the charging current are compared at a step d. If the charging current is determined to be inadequate, then the PWM controller 30, which acts as means for increasing the charging power from the motor/generator MG, is controlled and the fuel flow rate is raised to increase the charging current (step e). This is followed by a step f, at which it is determined, based on the signal from the rotation sensor 27, whether the internal combustion engine is running at the predetermined rpm, and by a step g, at which the state of the load is checked, based on the signal from the fuel flow rate sensor 26. If the answers at both steps are affirmative, the program proceeds to a step h.

At the step h, the control unit 21 executes control in accordance with th control map within its ROM, based on signals from the fuel flow rate sensor 26, the rotation sensor 27 and the boost sensor 24. For the region between the fully-loaded curve B and the torque-up curve C, the control unit 21 calculates an output for the inverter 29 and controls the inverter 29 in such a manner that the motor/generator MG will operate as a motor. Next, the output signal of the boost sensor 24 is checked at a step i. If the boost pressure is of a predetermined value, then an integrated value of the charging power is calculated. This value is checked at a step j. The integrated value of the power is checked as a way of monitoring excessive discharge of the battery 32. This is necessary because the supply of the charging current to the battery 32 is terminated while the motor/generator MG is operating as a motor. If an affirmative decision is rendered at the step j, the program returns to the initial step a. If the result of checking the integrated value of power indicates that the battery 32 will be discharged excessively, the lamp 33 is lit and the program returns to the step h. Accordingly, fine adjustment processing is performed based on the control map, and the motor/generator MG is operated as a generator to charge the battery 32.

Note that if the result of checking the boost pressure at the step i indicates that the predetermined value has not been obtained, then the program returns to the step h in order that a recalculation can be made.

In the illustrated embodiment, the injector 25 is provided with the fuel flow rate sensor 26 as means for sensing the load on the internal combustion engine. However, it is also possible to sense the load by a sensor which senses the amount of accelerator pedal depression, or, depending on the type of engine, by a sensor which senses the position of a fuel injection quantity rack in a Diesel engine or by a carburettor throttle-opening sensor in a petrol engine.

## Claims

1. Power generation apparatus, for use with an engine (20), having a supercharger (1) comprising a first impeller (8) located, in use, in an intake path (11) of the engine and a second impeller (9) located, in use, in an exhaust path of the engine and coupled to a rotary shaft (7) of the first impeller; a rotary electric machine (MG) comprising a rotor (13, 17) driven by the rotary shaft and a stator (15, 16) mounted around the rotor; means (27) for sensing the rotational speed of the engine; means (21) for sensing the state of loading of the engine; means (29, 30) for controlling the rotary electric machine so that the machine will operate as a motor when the load on the engine is determined to be greater than a predetermined value based on a signal from the loading state sensing means and so that the machine will operate as a generator when the load on the engine is determined to be smaller than the predetermined value based on the signal from the loading state sensing means; a battery mounted on a vehicle on which the engine is mounted; and characterised by:

means (26) for sensing the quantity of fuel supplied to the engine, the state of loading of the engine being based on the amount of fuel supplied thereto and the rotational speed of the engine; an inverter (29) for converting DC electrical power from the battery into AC electric power and for supplying AC electric power to the rotary electric machine based on a control signal from the control means when the rotary electric machine operates as a motor; a PWM (Pulse Width Modulation) controller (30) for controlling, at a predetermined value, the voltage of the electric power generated by the electric rotary machine when the rotary electric machine operates as a generator; and a regulator (31) for regulating the electric power with the voltage thereof controlled by the PWM controller (30) to match the voltage of the battery and for charging the battery with the regulated electric power.

2. Apparatus according to claim 1, characterised in that the rotary electric machine (MG) is an induction motor having a squirrel-cage rotor.

3. Apparatus according to claim 1, characterised in that the rotary electric machine (MG) is an alternating current machine having a permanent magnet rotor.

4. Apparatus according to claim 1, characterised in that supercharging of the engine (20) is assisted when the rotary electric machine (MG) operates as a motor.

5. Apparatus according to claim 4, characterised in that the rotary electric machine (MG) is subject to optimum control as a motor based on a signal from means (28) for sensing rotation of the rotary electric machine.

6. Apparatus according to claim 1, wherein the control means (29, 30) includes means for checking the voltage of the battery when the engine is idling and for operating the rotary electric machine as a generator and increasing fuel supplied to the engine when the voltage of the battery is lower than a predetermined value.

7. Apparatus according to claim 1, wherein the control means (29, 30) includes means for comparing a consumed current supplied from the battery with a charging current supplied to the battery when the rotary electric machine operates as the generator and for increasing charging electric power if the consumed current is larger than the charging current.

8. Apparatus according to claim 7, wherein the means for increasing charging electric power has means for controlling the PWM controller and increasing fuel supplied to the engine.

**Patentansprüche**

1. Vorrichtung zur Krafterzeugung in Verbindung mit einem Verbrennungsmotor (20) einschl. eines Kompressors (1), mit einem ersten Schaufelrad (8), das während des Gebrauchs in einem Ansaugweg (11) des Motors angeordnet ist, und einem zweiten Schaufelrad (9), das während des Betriebes in einem Auspuffweg des Motors angeordnet und mit einer Welle (7) des ersten Schaufelrades verbunden ist; mit einer rotierenden elektrischen Maschine (MG), die einen Rotor (13, 17) aufweist, der durch die Welle angetrieben wird, sowie einen Stator (15, 16), der um den Rotor herum angebracht ist; mit Mitteln (27) zum Messen der Drehgeschwindigkeit des Motors; mit Mitteln (21) zur Messung der Höhe der Motorlast; mit Mitteln (29, 30) zur Steuerung der rotierenden elektrischen Maschine, so daß die Maschine als Motor arbeitet, wenn die Motorlast größer bestimmt wird als ein vorgegebener Wert, der auf einem Signal von den Mitteln zur Messung der Lasthöhe basiert, und so daß die Maschine als Generator arbeitet, wenn die Motorlast kleiner bestimmt wird als der vorgegebene Wert, der auf dem Signal von den Mitteln zur Messung der Lasthöhe basiert; mit einer Batterie, die an dem Fahrzeug angebracht ist, an dem der Motor angebracht ist; *gekennzeichnet* durch:
    Mittel (26) zur Messung der dem Motor zugeführten Kraftstoffmenge, wobei die Lasthöhe des Motors auf die ihm zugeführte Kraftstoffmenge und die Drehgeschwindigkeit des Motors gegründet wird; einen Inverter (29) zur Umwandlung von elektrischer Kraft in Form von Gleichstrom von der Batterie in elektrische Kraft in Form von Wechselstrom und zum Liefern von elektrischer Energie als Wechselstrom zu der rotierenden elektrischen Maschine auf der Grundlage eines Steuersignals von den Steuermitteln, wenn die rotierende elektrische Maschine als Motor arbeitet; ein PWM- Steuergerät (30) (Pulse Width Modulation) zur Steuerung bei einem vorgegebenen Wert der Spannung der elektrischen Kraft, die durch die elektrische rotierende Maschine erzeugt wird, wenn die rotierende elektrische Maschine als Generator arbeitet; und durch einen Regler (31) zur Regulierung der elektrischen Kraft, wobei ihre Spannung durch das PWM-Steuergerät (30) passend zur Spannung der Batterie und zum Laden der Batterie mit der regulierten elektrischen Kraft gesteuert wird.

2. Vorrichtung nach Anspruch 1, dadurch *gekennzeichnet*, daß die rotierende elektrische Maschine (MG) ein Induktionsmotor mit einem Kurzschlußkäfigrotor ist.

3. Vorrichtung nach Anspruch 1, dadurch *gekennzeichnet*, daß die rotierende elektrische Maschine (MG) eine Wechselstrommaschine mit einem Permanentmagnetenrotor ist.

4. Vorrichtung nach Anspruch 1, dadurch *gekennzeichnet*, daß die Aufladung des Motors (20) unterstützt wird, wenn die rotierende elektrische Maschine (MG) als Motor arbeitet.

5. Vorrichtung nach Anspruch 4, dadurch *gekennzeichnet*, daß die rotierende elektrische Maschine (MG) Gegenstand einer optimalen Steuerung als ein Motor ist, die auf einem Signal von den Mitteln (28) zur Messung der Drehung der rotierenden elektrischen Maschine basiert.

6. Vorrichtung nach Anspruch 1, bei der die Steuermittel (29, 30) Mittel zur Überprüfung der Spannung der Batterie einschließen, wenn der Motor im Leerlauf läuft, und für das Betreiben der rotierenden elektrischen Maschine als ein Generator und zum Anheben des dem Motor zugeführten Kraftstoffs, wenn die Spannung der Batterie geringer ist als ein vorgegebener Wert.

7. Vorrichtung nach Anspruch 1 bei der die Steuermittel (29, 30) Mittel einschließen zum Vergleichen eines von der Batterie gelieferten verbrauchten Stromes mit einem Batterie zugeführten Ladestrom, wenn die rotierende elektrische Maschine als Generator arbeitet, und zum Anheben der elektrischen Ladekraft, wenn der verbrauchte Strom größer ist als der Ladestrom.

8. Vorrichtung nach Anspruch 7, bei der die Mittel zum Anheben der elektrischen Ladekraft Mittel zur Steuerung des PWM-Steuergerätes und zum Anheben des dem Motor zugeführten Kraftstoffs aufweisen.

**Revendications**

1. Appareil de production de puissance, destiné à être utilisé en combinaison avec un moteur thermique (20) et possédant un dispositif de suralimentation (1) comprenant une première roue (8) située, en service, sur un trajet d'admission (11) du moteur thermique et une deuxième roue (9) située, en service, sur un trajet d'échappement du moteur thermique et accouplée à un arbre rotatif (7) de la première roue; une machine électrique rotative (MG) comportant un rotor (13, 17) entraîné par l'arbre rotatif et un stator (15, 16) monté autour du rotor; un moyen (27) pour détecter la vitesse de rotation du moteur thermique; un moyen (21) pour détecter l'état de charge du moteur thermique; un moyen (29, 30) pour commander la machine électrique rotative de manière que cette machine fonctionne comme un moteur lorsqu'il est déterminé que la charge sur le moteur thermique est supérieure à une valeur prédéterminée, sur la base d'un signal du dispositif pour détecter l'état de charge, et de manière que la machine fonctionne comme une génératrice lorsqu'il est déterminé que la charge sur le moteur thermique est inférieure à la valeur prédéterminée, sur la base du signal du dispositif pour détecter l'état de charge; une batterie montée sur un véhicule sur lequel est installé le moteur thermique, caractérisé par:

un moyen (26) pour détecter la quantité de carburant fournie au moteur thermique, l'état de charge du moteur thermique étant basé sur la quantité de carburant fournie à celui-ci et sur la vitesse de rotation du moteur thermique; un onduleur (29) pour convertir de la puissance électrique à courant continu de la batterie en puissance électrique à courant alternatif et pour fournir de la puissance électrique à courant alternatif à la machine électrique rotative sur la base d'un signal de commande délivré par le moyen de commande lorsque la machine électrique rotative fonctionne comme un moteur; une commande (30) à modulation d'impulsions en largeur pour régler à une valeur prédéterminée la tension de la puissance électrique produite par la machine électrique rotative lorsque cette machine fonctionne comme une génératrice; et un régulateur (31) pour régler la puissance électrique, dont la tension est réglée par la commande (30) à modulation d'impulsions en largeur, de manière à correspondre à la tension de la batterie et pour charger la batterie avec la puissance électrique réglée.

2. Appareil selon la revendication 1, caractérisé en ce que la machine électrique rotative (MG) est un moteur à induction possédant un rotor en cage d'écureuil.

3. Appareil selon la revendication 1, caractérisé en ce que la machine électrique rotative (MG) est une machine à courant alternatif possédant un rotor à aimants permanents.

4. Appareil selon la revendication 1, caractérisé en ce que la suralimentation du moteur thermique (20) est assistée lorsque la machine électrique rotative (MG) fonctionne comme un moteur.

5. Appareil selon la revendication 4, caractérisé en ce que la machine électrique rotative (MG) est soumise à une commande optimale en tant que moteur sur la base d'un signal provenant d'un dispositif (28) pour détecter la rotation de la machine électrique rotative.

6. Appareil selon la revendication 1, dans lequel le moyen de commande (29, 30) comporte un moyen pour contrôler la tension de la batterie lorsque le moteur thermique tourne au ralenti et pour faire fonctionner la machine électrique rotative comme une génératrice et accroître la quantité de carburant fournie au moteur thermique lorsque la tension de la batterie est inférieure à une valeur prédéterminée.

7. Appareil selon la revendication 1, dans lequel le moyen de commande (29, 30) comporte un moyen pour comparer un courant consommé fourni par la batterie avec un courant de charge fourni à la batterie lorsque la machine électrique rotative fonctionne comme une génératrice et pour augmenter la puissance électrique de charge si le courant consommé est plus grand que le courant de charge.

8. Appareil selon la revendication 7, dans lequel le moyen pour augmenter la puissance électrique de charge comporte un moyen pour agir sur la commande à modulation d'impulsions en largeur et pour accroître la quantité de carburant fournie au moteur thermique.

EP 0 217 537 B1

# Fig. 1

SUPERCHARGER
1
MOTOR-GENERATOR
MG
SHAFT
7
COMPRESSOR IMPELLER
TURBINE IMPELLER
ROTOR
STATOR COIL

# Fig. 2

SUPERCHARGER
1
MOTOR-GENERATOR
MG'
SHAFT
7
COMPRESSOR IMPELLER
TURBINE IMPELLER
MAGNET ROTOR
STATOR COIL

1

# Fig. 3

INTERNAL COMBUSTION ENGINE 20
BOOST SENSOR 24
SUPERCHARGER 1
23
28
25
22
26
FLOW RATE SENSOR
27 ROTATION SENSOR
20a
30
29
CONTROL UNIT 21
OUT  IN  BUS  CPU  RAM  ROM
33 L
31
32

# Fig. 4

FUEL FLOW RATE (ENGINE LOAD)

Q

C

B

TORQUE-UP TORQUE

FULLY LOADED CURVE

Qn — Xn

A

UNLOADED CURVE

O      Nn      N

ROTATIONAL SPEED

# Fig.5